# EUROPEAN PATENT APPLICATION

(11) **EP 1 548 529 A1**
(43) Date of publication of application: **29.06.2005**
(21) Application number: 04258113.2
(22) Date of filing: 23.12.2004
(51) Int. Cl.: G05B 19/4063

(54) **Numerical controller**

(30) Priority: 25.12.2003 JP 2003429749
(71) Applicant: FANUC LTD, Minamitsuru-gun, Yamanashi 401-0597 (JP)
(72) Inventor: Sone, Yuji, Fanuc, Minamitsuru-gun Yamanashi, 401-0511 (JP); Ando, Hiroshige, Minamitsuru-gun Yamanashi, 401-0310 (JP)
(74) Representative: Billington, Lawrence Emlyn

(57) **Abstract**

A numerical controller capable of reducing movement of the line of sight between a video picture and character information. The numerical controller, which controls a machine tool, comprises a video camera set in the machine tool, display image preparing means for forming display image data to be displayed having character information superposed thereon on the video picture, using video image data and internal data of the numerical controller, and a display device for displaying the display image data. Information from the numerical controller is displayed superposed, depending on the then operating conditions, on a picture of a machining state shot with a camera set in the machine tool. The character information is displayed superposed on the video picture, and the display position of the character information is situated close to the position of the video picture. By doing this, movement of the line of sight between the video picture and the character information is reduced. By previously setting camera parameters for the character information, moreover, video pictures of those parts of a workpiece and the machine tool which are associated with the character information are displayed.

## Description

### BACKGROUND OF THE INVENTION

### 1. Field of the Invention

The present invention relates to a numerical controller, and more particularly to a numerical controller in which a video image showing a machining state of a machine tool controlled by the numerical controller and information on the numerical controller are displayed.

### 2. Description of the Related Art

In monitoring the machined state of a workpiece in a machine tool, the workpiece is observed through a view window that is attached to a splash guard of the machine tool. Alternatively, an image picked up by a video camera is displayed for observation.

For the observation through the video camera, a display device for video pictures is conventionally provided besides a numerical controller. Alternatively, a video picture may be displayed on a display screen that is separate from a screen for the display of internal information.

Displayed on the screen for the display of the internal information of the numerical controller is character information, which includes position information on a tool, a workpiece, etc. and alarm messages and is given from inside the numerical controller.

A method described in JP 4-310106A or JP 4-17003A, for example, is known as a method of capturing the machined state of a workpiece with a video camera and displaying its resulting video picture on a display device of a numerical controller.

A display device of the numerical controller described in each of the above documents mainly displays internal information of the apparatus, such as coordinates and programs. A video picture is displayed in an image region that is collaterally provided besides an image region for character information in the internal information. Although the information on the numerical controller and the video picture are displayed on one screen, therefore, their respective display regions are divided, so that the line of sight must be slightly moved to observe them simultaneously. Thus, the position that requires a check on the video picture is inevitably distant from the display position for the character information, so that comparison between the two positions takes a lot of time.

The video camera has its capturing angles (pan and tilt) fixed so that it can shoot a preset fixed spot of a workpiece. Further, the area (magnification/reduction rate or zoom) of a capturing region is set in advance. Therefore, the image position of the displayed video picture does not always agree with the information on the numerical controller. In some cases, the video picture may fail to be displayed in a place where an observer deals with the information on the apparatus.

The video picture can be enlarged, reduced, or moved by operating the video camera. To attain this, however, the observer is expected to manipulate the camera. The observer must determine a region associated with the information on the numerical controller as he/she operates the camera, so that display of a proper region requires much time. If the observer has no sufficient knowledge about machining, it may possibly hinder quick observation.

If alarm information is displayed, in particular, a video picture of a region associated with the alarm information is expected to be displayed without delay. Since the region that is normally displayed by the video camera is not always coincident with the position of occurrence of an abnormal state, however, recognition of the abnormal spot by the video picture is time-consuming and obstructive to a quick response.

### SUMMARY OF THE INVENTION

The present invention provides a numerical controller capable of reducing movement of the line of sight between a video picture and character information and displaying video pictures of those parts of a workpiece and a machine tool which are associated with the character information.

According to the present invention, character information is displayed superposed on a video picture, and the display position of the character information is situated close to the position of the video picture associated with the character information. By doing this, movement of the line of sight between the video picture and the character information is reduced. By previously setting camera parameters for the character information, moreover, video pictures of those parts of a workpiece and a machine tool which are associated with the character information are displayed.

Information (coordinates, programs, etc.) from a numerical controller (NC), required depending on the then operating conditions, is synthetically displayed superposed on a picture of a machining state that is shot with a camera set in the machine tool. Thus, a display device of the NC can singly achieve a state check by means of a display device of the NC apparatus and an actual machining state check through a view window of a splash guard, which have conventionally been performed by an operator during a machining program check or operation for arrangements. Thus, the line of sight or the like need not be moved, so that the operability can be improved.

With use of the display device, moreover, the view window that is conventionally provided on the splash guard can be omitted. Therefore, the display device may be set in a space for the splash guard. In checking operation, in this case, the operator can obtain substantially the same bodily sensation that he/she feels during the check through the view window.

By moving or zooming the camera, furthermore, the check can be carried out at a usually impossible angle during operation or in a close-up manner.

If necessary, the display can be switched over to a preset display screen of the NC, and it can double as a display device of the NC and a machine operator's panel. Thus, the display device of the conventional NC and the machine operator's panel, which are independently set outside the machine, may be omitted, so that the machine can be reduced in size.

A numerical controller of the present invention controls a machine tool in accordance with a machining program, and comprises: a video camera arranged in the machine tool for obtaining video image data of the machine tool; display image preparing means for preparing display image data for displaying a video image of the machine tool and character information to be superposed thereon based on the video image data obtained by the video camera and internal data of the numerical controller; and a display device for displaying the video image and the character information superposed thereon according to the display image data prepared by the display image preparing means.

The internal data includes at least one of data of the machining program, coordinate data and alarm information.

The display image preparing means may obtain the video image data and the internal data synchronously with each other in accordance with an operation state of the numerical controller, so that the video image and the character information are displayed in accordance with the operation state of the numerical controller by the display device.

The numerical controller may further comprise a first reference table in which video-capturing parameters of the video camera and items of the internal data are set for respective machining processes performed in accordance with the machining program. In this case, the operation state of the numerical controller is determined based on a machining process in execution, video-capturing parameters and an item of the internal data for the machining process in execution are read from the first reference table, the video camera is drivingly controlled in accordance with the read video-capturing parameters and the character information is prepared based on the internal data of the read item.

The items of the internal data include at least one of a part of the machining program in execution and a commanded or actual coordinate position of machining, and the video capturing parameters include at least one of a pan, a tilt and a zoom of the video camera for obtaining video image data of the machine tool at the commanded or actual coordinate position.

The display image data may include coordinate data of a display position of the character information on a display screen of the display device. In this case, the first reference table may store display positions of the character information on the display screen for the respective items of the internal data, and the coordinate data of the display position of the character information on the display screen may be determined in accordance with the read item of internal data referring to the reference table.

The numerical controller may further comprise a second reference table in which video-capturing parameters of the video camera and alarm information are set for respective alarm states of the numerical controller. In this case, video capturing parameters and alarm information for an alarm state occurred in the numerical controller are read from the second reference table, the video camera is drivingly controlled according to the read video-capturing parameters and the character information is prepared based on the read alarm information.

The alarm information includes at least one of a kind of an abnormality, a location of the abnormality and a countermeasure for the abnormality, and the video capturing parameters include at least one of a pan, a tilt and a zoom of the video camera for obtaining video image data of the machine tool at the location of the abnormality or at the machining position.

The display image data may include coordinate data designating a display position of the character information on a display screen of the display device, and the display device may include a touch panel for an operator to designate the display position of the character information on the display screen. Thus, the display position of the character information on the display screen is changed to the display position designated through the touch panel.

The display device may be located on a front face of a splash guard of the machine tool. The display device may be used as a display device for a manual data input device of the numerical controller.

According to the numerical controller of the present invention, information (coordinates, programs, etc.) from the numerical controller, required depending on the then operating conditions, can be synthetically displayed superposed on a picture of a machining state shot with a camera set in the machine tool.

According to the numerical controller of the invention, movement of the line of sight between the video picture and the character information can be reduced. Further, video pictures of those parts of the workpiece and the machine tool which are associated with the character information can be displayed.

### BRIEF DESCRIPTION OF THE DRAWINGS

FIG 1 is a block diagram of a hardware for illustrating an embodiment of a numerical controller according to the present invention;
FIG. 2 is a schematic view for illustrating an example of operation of display image preparing means of the numerical controller of the invention;
FIG. 3 is a flowchart for illustrating an example of operation for the case where image information and character information are displayed with the numerical controller of the invention in the operation state;
FIG. 4 is a flowchart for illustrating an example of operation for the case where image information and character information are displayed when an alarm is issued to the numerical controller of the invention;
FIG. 5 shows an example in which machine coordinates are displayed together with a video picture of the numerical controller of the invention;
FIG 6 shows an example in which programs are displayed together with the video picture of the numerical controller of the invention;
FIG. 7 shows an example of display of the numerical controller of the invention at the time of generation of an alarm;
FIG. 8 shows an example of display in which the display position of the character information of the invention is moved;
FIG. 9 shows a configuration example of the numerical controller of the invention; and
FIG. 10 shows a configuration example of a conventional numerical controller.

### DETAILED DESCRIPTION

A numerical controller according to the present invention will now be described with reference to the accompanying drawings.

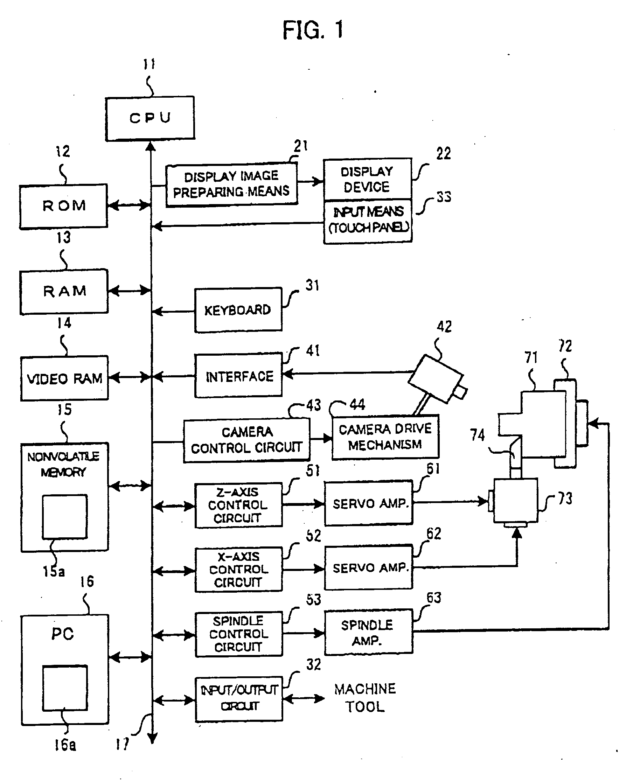

FIG. 1 is a block diagram of a hardware for illustrating an embodiment of the numerical controller of the invention.

A processor 11 controls the entire numerical controller in accordance with a system program stored in a ROM 12. For example, an EPROM or EEPROM can be used as the ROM 12. A RAM 13, which is an SRAM, for example, is loaded with various data. A nonvolatile memory 15 is stored with a machining program 15a, parameters, etc. If a CMOS or the like that is backed up by a battery is used for the memory, its contents can be retained even after the power of the numerical controller is switched off.

On receiving commands for an M-function, S-function, T-function, etc., a PC (programmable controller) 16 decodes these commands in accordance with a sequence program 16a and delivers an output signal for controlling a machine tool.

In response to a limit switch signal from the machine side or a switch signal from a machine operator's panel, for example, moreover, the sequence program 16a is processed to deliver an output signal for controlling the machine side. Signals required by the numerical controller are transferred to the RAM 13 through a bus 17 and read by a processor 11.

An input/output circuit 32 transmits to and receives input and output signals from the machine side. More specifically, it receives the limit switch signal from the machine side and the switch signal from the machine side, and the PC 16 reads these signals. On receiving an output signal for controlling a pneumatic actuator or the like on the machine side, moreover, the PC 16 delivers it to the machine side.

Display image preparing means 21 converts data, such as current positions, movement amounts, etc. of individual axes, stored in the RAM 13 into display signals and delivers them to a display device 22. A CRT, liquid crystal display device, etc. may be used as the display device 22.

Besides a keyboard 31, a touch panel 33 that is attached to the display device 22 may be used as an input unit. The touch panel can be used as position assigning means when a display position of character information displayed on a display screen of the display device 22 is moved to any desired position.

On receiving a Z-axis movement command from the processor 11, a Z-axis control circuit 51 delivers it to a servo amplifier 61. In response to this movement command, the servo amplifier 61 drives a servomotor for a Z-axis to move a tool holder 73 in the Z-axis direction. A tool 74 is attached to the tool holder 73, and subjects a workpiece 71 held by a chuck 72 to machining such as turning.

On receiving an X-axis movement command from the processor 11, an X-axis control circuit 52 delivers it to a servo amplifier 62. In response to this movement command, the servo amplifier 62 drives a servomotor for an X-axis to move the tool holder 73 in the X-axis direction, thereby notching the workpiece 71.

A spindle control circuit 53 receives a spindle rotation command from the processor 11 and delivers a spindle speed command to a spindle amplifier 63. On receiving this spindle speed command, the amplifier 63 rotates a spindle at an assigned rotational speed to rotate the main shaft of a lathe, thereby cutting the workpiece 71.

A video camera 42 shoots a machining state in the machine tool and delivers a video signal to an interface 41. The interface 41 converts the video signal into video data the processor 11 can deal with. The video data are loaded into a video RAM 14. The video data stored in the video RAM 14 is image-processed by the display image preparing means 21 and delivered to the display device 22.

Further, the video camera 42 is provided with a camera drive mechanism 44 and a camera control circuit 43. The camera drive mechanism 44 controls the direction of a camera body to settle a capturing position of the video camera or makes control for enlargement and reduction. The control circuit 43 controls the camera drive mechanism 44. Video capturing parameters used in controlling the direction of the video camera and in the control for enlargement and reduction include pan, tilt, and zoom.

The display image preparing means 21 obtains internal data of the numerical controller and prepares display image data to be displayed in combination with the video data from the video RAM 14. The internal data include, for example, the machining program, current positions, movement amounts, etc. of the individual axes, alarm information, etc., and are displayed as character information on the display screen.

Thereupon, the information in the numerical controller and a video picture picked up by the video camera 42 are displayed superposed on the display screen of the display device 22.

The numerical controller is provided with storage tables in which the video capturing parameters and internal data items of the video camera and alarm information are set in advance. The storage tables are provided corresponding to individual processes of the machining program. Set in each storage table are the capturing direction and magnification/reduction rate of the video camera for each execution stage of the numerical controller based on the execution of the machining program. Additional set items include display position data designating a position of the character information on the display screen and alarm display contents that are responsive to abnormal states.

As the video capturing parameters set for each process of the machining program are read out and used to actuate the camera drive mechanism 44, a video picture of a given spot can be obtained depending on the state of execution of the numerical controller. Associated video image data and internal data can be obtained synchronously by obtaining internal data of the numerical controller corresponding to the read internal data item.

A machining position, among other internal data, may be supposed to be either a commanded coordinate position for machining based on the machining program or an actual coordinate position obtained from the numerical controller.

The display image preparing means 21 can synchronously display a video picture displayed on the display screen and associated internal data by forming the display image data using the video image data and internal data.

In case of abnormality, moreover, the video capturing parameters and the alarm information are previously set in preset data depending on the content of abnormality. By doing this, the capturing location of the camera can be automatically set in accordance with the content of abnormality. Thus, an alarm content and an action content corresponding to the content of abnormality, as well as video image data that reflect the content of abnormality, can be obtained.

The display image preparing means 21 can synchronously display on its display screen the video picture of the given spot and the alarm information in case of abnormality by forming the display image data using the video image data, alarm content, and action content.

The storage tables may be stored in the ROM 12 in advance. Alternatively, the video capturing parameters may be stored in a memory (not shown) in the camera control circuit 43. In this case, the internal data items and the alarm information are stored in the display image preparing means 21.

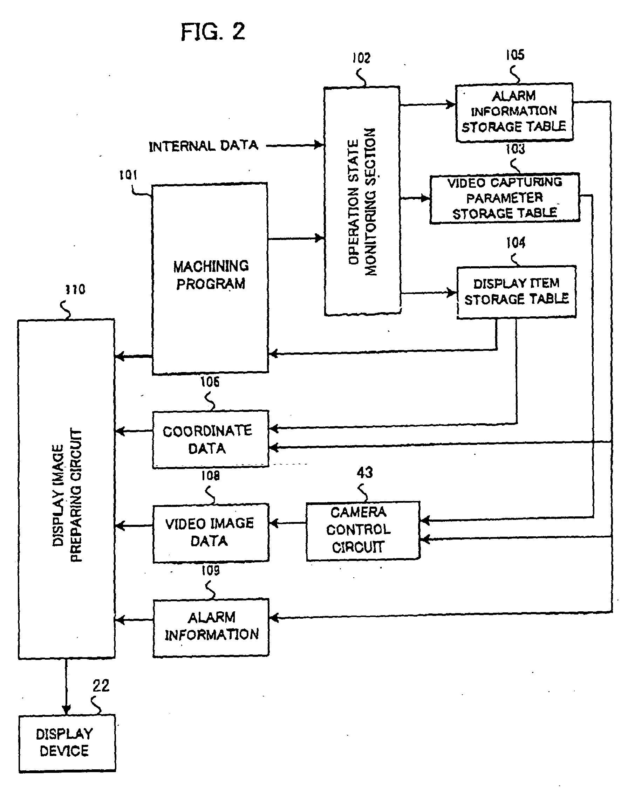

FIG. 2 is a schematic diagram of an example of operation of display image preparing means of the numerical controller of the invention.

In FIG 2, an operation state monitoring section 102 monitors machining process by execution of a machining program 101, thereby monitoring the operation state of the numerical controller. Also, the monitoring section 102 watches the internal signal of the numerical controller, thereby monitoring an abnormal state.

Values of video capturing parameters of the video camera corresponding to the operation state of the numerical controller are set in a video capturing parameter storage table 103. The video capturing parameters include, for example, pan and tilt, which determine the capturing direction of the video camera, and zoom, which determines the magnification/reduction rate.

Values of the video capturing parameters corresponding to the operation state received from the operation state monitoring section 102 are read from the video capturing parameter storage table 103 and delivered to the camera control circuit 43. Based on the video capturing parameter, the camera control circuit 43 controls the video camera, and obtains and delivers video image data 108 to a display image preparing circuit 110.

Alternatively, the capturing position of the camera may be assigned by using input means so that the camera control circuit 43 can be controlled in accordance with an operator's instruction.

In a display item storage table 104, items of internal data that are displayed on the display device as character information in accordance with the operation state of the numerical controller are set. The items of the display information include, for example, a part of the machining program in execution, machining position, etc.

An item of internal data corresponding to the operation state received from the operation state monitoring section 102 is read from the display item storage table 104. It reads out the part of the machining program in execution from the machining program 101 and sends it to the display image preparing circuit 110. For the machining position, the storage table 104 obtains coordinate data 106 on the actual coordinates of the machining position from the numerical controller. Further, coordinate data on commanded coordinates of the machining position may be obtained from the machining program.

In an alarm information storage table 105, the video capturing parameters of the video camera and the alarm information to be displayed on the display device are set for the abnormal state of the numerical controller. The alarm information include kinds of alarms, countermeasures against the alarms, etc.

From the alarm information storage table 105, video capturing parameters corresponding to the abnormal state determined by the operation state monitoring section 102 are read out and are delivered to the camera control circuit 43. In accordance with the read video capturing parameters, the camera control circuit 43 controls the video camera, and video image data 108 obtained at the location of abnormality are sent to the display image preparing circuit 110. Alarm information 109 for the abnormal state is read from the alarm information storage table 105 and sent to the display image preparing circuit 110. Further, the coordinate data 106 of the location of the abnormality are obtained and sent to the display image preparing circuit 110.

The display image preparing circuit 110 prepares display image data for superposed display of character information, such as the machining program 101, coordinate data 106, alarm information 109, etc., on the obtained video image data 108, and displays them on the display device 22.

The display position of the character information on the display screen can be set in combination with the capturing position in accordance with, for example, the machining program. By doing this, the character information can be displayed that is associated with regions near positions to be observed, such as the machining position in the image displayed on the display screen.

Further, the display device may be provided with instruction means, such as a touch panel, and can move the character information to a position assigned by the instruction means.

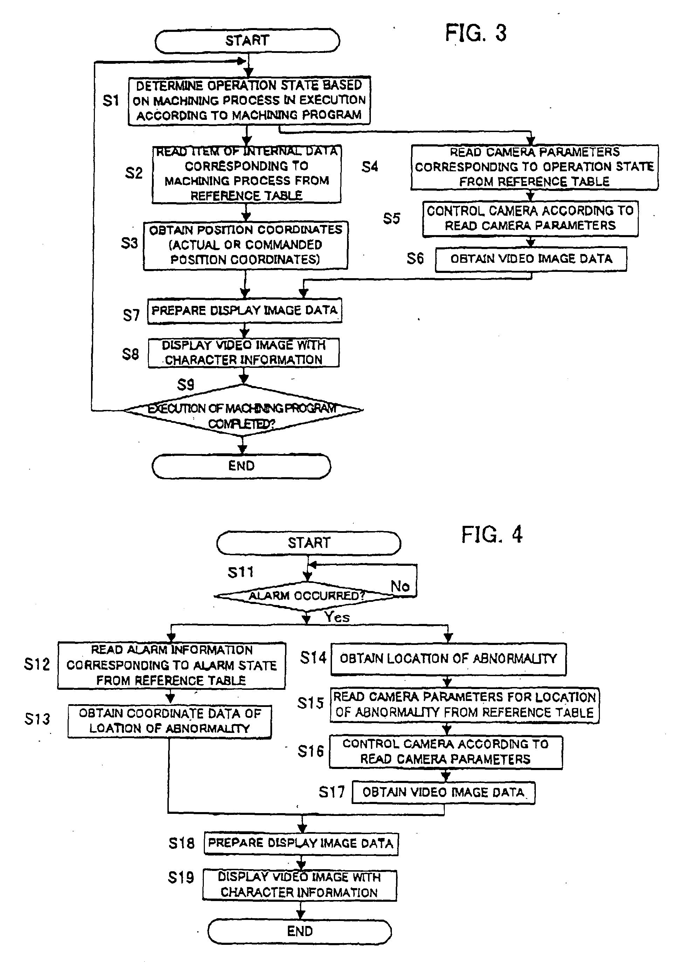

FIG 3 is a flowchart showing an example of operation for the case where the image information and character information are displayed in the operation state of the numerical controller.

The operation state of the numerical controller is determined based on a machining process in execution according to the machining program (Step S1). An item of display contents (character information) corresponding to the determined operation state is read out from the reference table (storage table) (Step S2), and the position coordinates are obtained. The position coordinates, which represent the machining position for the operation state, may be commanded position coordinates in the machining program or actual position coordinates (Step S3).

Further, video capturing parameters (camera parameters) corresponding to the determined operation state are read out from their reference table (storage table) (Step S4), the camera is controlled in accordance with the read video capturing parameters (Step S5), and video image data are obtained (Step S6).

Display image data are prepared using the video image data obtained in the preceding process and the character information on the internal data. (Step S7), and displayed on the display device (Step S8). This process is repeated with the advance of the machining program until the execution of the machining program is completed (Step S9).

FIG. 4 is a flowchart for illustrating an example of operation for the case where the image information and character information are displayed when an alarm is issued to the numerical controller.

If an alarm signal is issued from the machine tool or abnormal state occurs in the numerical controller (Step S11), alarm information (character information) corresponding to the abnormal state is read out from its reference table (storage table) (Step S12), and its position coordinates are obtained. The position coordinates, which represent the machining position for the operation state, may be commanded position coordinates on the machining program as well as actual position coordinates (Step S 13).

Further, an abnormality occurrence position is obtained (Step S14), video capturing parameters (camera parameters) corresponding to the occurrence position are read out from the table (storage table) (Step S15), the camera is controlled according to the read video capturing parameters (Step S 16), and video image data are obtained (Step S 17).

Display image data are prepared using the video image data obtained in the above process and the character information including the alarm information, position coordinates, etc, (Step S 18), and displayed on the display device (Step S 19).

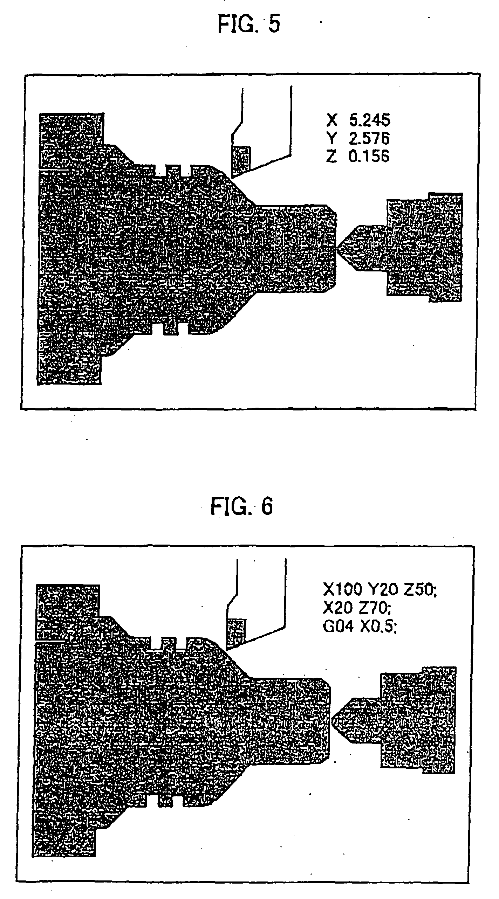

An example of display according to the present invention will now be described with reference to FIGS. 5 to 8.

FIG. 5 shows an example in which machine coordinates are displayed together with a video picture. Character information on the machine coordinates (e.g., machining position depending on the tool) that are formed of X, Y, and Z coordinates is displayed near the machining position.

FIG 6 shows an example in which programs are displayed together with the video picture. Character information on the machining program is displayed near the machining position. A program of several lines may be displayed at the time of program check.

In a conventional numerical controller, a display position for character information is fixed and located at a distance from an observation target position, such as the machining position. Recognizing both image information and character information requires movement of the line of sight. Since the observation target position and the character information are displayed close to each other according to the invention, however, they can be easily recognized without requiring the movement of the line of sight.

According to the present invention, moreover, the display device of the numerical controller can singly achieve a state check by means of a display device of the numerical controller and an actual machining state check through a view window of a splash guard, which have conventionally been performed by the operator during a machining program check or operation for arrangements. Thus, the line of sight or the like need not be moved, so that the operability can be improved.

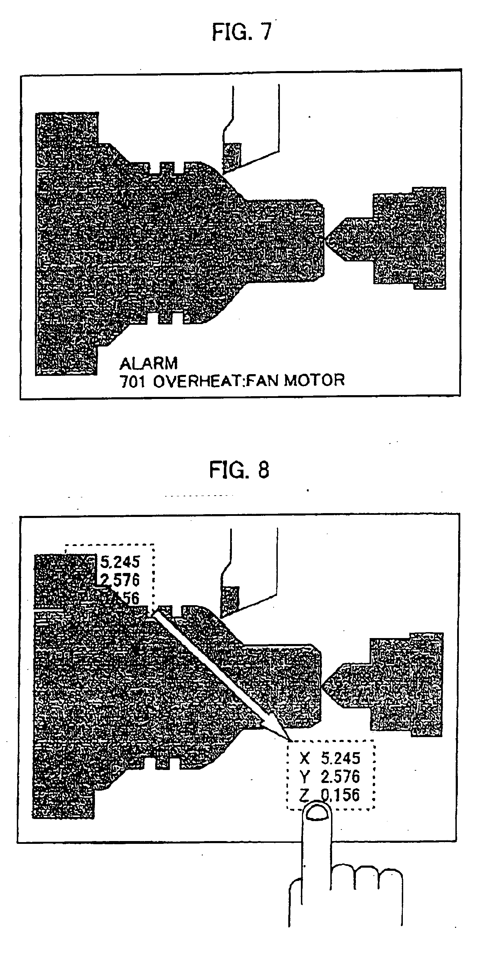

FIG. 7 shows an example of display at the time of generation of an alarm, in which the generation and content of the alarm are displayed. In the example of FIG. 7, the alarm information is displayed at the bottom part of the display screen. Alternatively, however, the display position of the alarm information may be situated close to the machining position.

FIG. 8 shows an example of display in which the display position of the character information is moved. In this case, the display position can be freely moved by giving instruction for the destination with use of the touch panel. Through the additional use of the touch panel, the operator can freely move the display position of information from the numerical controller that is synthesized into a video picture and displayed. Thus, the operator can enjoy a picture that is easy for him/her to see.

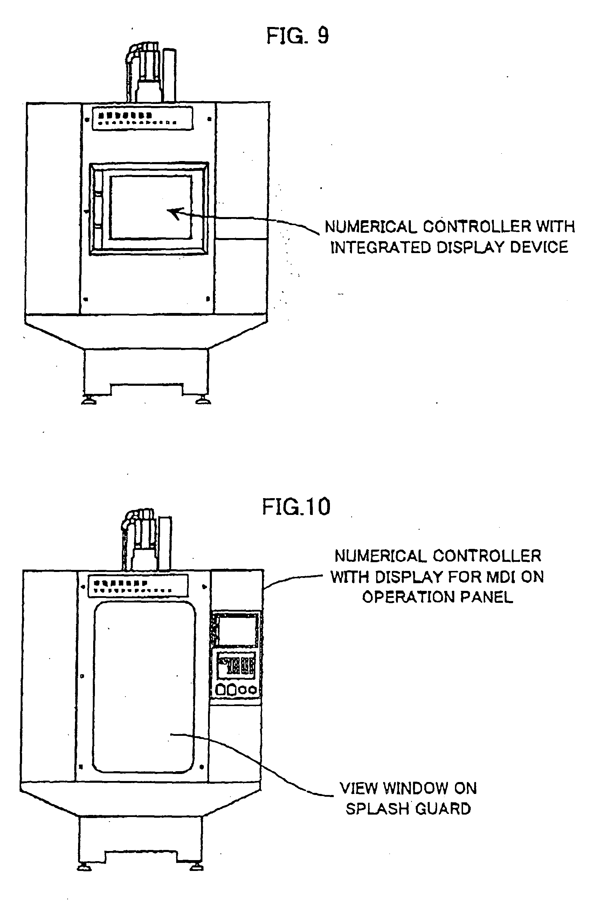

FIG. 9 shows a configuration example or an example of the display device of the numerical controller according to the invention. In the illustrated configuration example, the display device doubles as a display device for the operation of the numerical controller, and is located on a splash guard of a machine tool. The position of the display device on the splash guard is the conventional location of a view window. In the numerical controller of the present invention, an image of the internal state is picked up by the video camera in the machine tool and displayed on the display device, so that the conventionally essential view window may be omitted.

FIG 10 shows a configuration example of a conventional numerical controller. In this case, a view window is provided on a splash guard of a machine tool. Therefore, the numerical controller cannot be set on the splash guard, so that it must inevitably be located in a narrow place. Since it is arranged together with an MDI and a machine operator's panel, moreover, its surface area is narrow.

According to the present invention, on the other hand, the view window is omitted, so that the numerical controller can be set on the splash guard, and its surface area can be widened.

The capturing position of the video camera may be changed corresponding to the operation state of the numerical controller and can be controlled by an operator. In checking operation, therefore, the operator can obtain substantially the same bodily sensation that he/she feels during a check through a view window.

By moving or zooming the camera, moreover, the check can be carried out at a usually impossible angle during operation or in a close-up manner during operation.

If necessary, the display can be switched over to a preset display screen of the numerical controller, and it can double as a display device and a console of the numerical controller and a machine operator's panel. Thus, the display device of the conventional numerical controller and the machine operator's panel, which are independently set outside the machine, may be omitted, so that the machine can be reduced in size.

Since the view window is omitted, furthermore, the splash guard for the window need not be worked, so that the cost can be reduced correspondingly.

## Claims

1. A numerical controller for controlling a machine tool in accordance with a machining program, comprising:
a video camera arranged in the machine tool for obtaining video image data of the machine tool;
display image preparing means for preparing display image data for displaying a video image of the machine tool and character information to be superposed thereon based on the video image data obtained by said video camera and internal data of the numerical controller; and
a display device for displaying the video image and the character information superposed thereon according to the display image data prepared by said display image preparing means.

2. A numerical controller according to claim 1, wherein the internal data include at least one of data of the machining program, coordinate data and alarm information.

3. Anumerical controller according to claim 1, wherein said display image preparing means obtains the video image data and the internal data synchronously with each other in accordance with an operation state of the numerical controller, so that the video image and the character information are displayed in accordance with the operation state of the numerical controller by said display device.

4. A numerical controller according to claim 3, further comprising a first reference table in which video-capturing parameters of said video camera and items of the internal data are set for respective machining processes performed in accordance with the machining program,
wherein the operation state of the numerical controller is determined based on a machining process in execution, video-capturing parameters and an item of the internal data for the machining process in execution are read from said first reference table, said video camera is drivingly controlled in accordance with the read video-capturing parameters and the character information is prepared based on the internal data of the read item.

5. A numerical controller according to claim 4, wherein the items of the internal data include at least one of a part of the machining program in execution and a commanded or actual coordinate position of machining, and the video capturing parameters include at least one of a pan, a tilt and a zoom of said video camera for obtaining video image data of the machine tool at the commanded or actual coordinate position.

6. Anumerical controller according to claim 4, wherein the display image data include coordinate data of a display position of the character information on a display screen of said display device, said first reference table stores display positions of the character information on the display screen for the respective items of the internal data, and the coordinate data of the display position of the character information on the display screen are determined in accordance with the read item of internal data referring to the reference table.

7. A numerical controller according to claim 3, further comprising a second reference table in which video-capturing parameters of said video camera and alarm information are set for respective alarm states of the numerical controller,
wherein video capturing parameters and alarm information for an alarm state occurred in the numerical controller are read from said second reference table, said video camera is drivingly controlled according to the read video-capturing parameters and the character information is prepared based on the read alarm information.

8. A numerical controller according to claim 7, wherein the alarm information includes at least one of a kind of an abnormality, a location of the abnormality and a countermeasure for the abnormality, and the video capturing parameters include at least one of a pan, a tilt and a zoom of said video camera for obtaining video image data of the machine tool at the location of the abnormality or at the machining position.

9. Anumerical controller according to claim 1, wherein the display image data include coordinate data designating a display position of the character information on a display screen of said display device, said display device includes a touch panel for an operator to designate the display position of the character information on the display screen, so that the display position of the character information on the display screen is changed to the display position designated through said touch panel.

10. A numerical controller according to claim 1, wherein said display device is located on a front face of a splash guard of the machine tool.

11. A numerical controller according to claim 1, wherein said display device is used as a display device for a manual data input device of the numerical controller.
